# EUROPEAN PATENT SPECIFICATION

(11) **EP 3 845 287 B1**
(45) Date of publication and mention of the grant of the patent: **21.12.2022**
(21) Application number: 19220226.5
(22) Date of filing: 31.12.2019
(51) Int. Cl.: B01D 35/06, B01D 35/30, B03C 1/033

(54) **HYDRAULIC VALVE WITH MAGNET AND FILTER**
HYDRAULISCHES VENTIL MIT MAGNET UND FILTER
VANNE HYDRAULIQUE AVEC AIMANT ET FILTRE

(43) Date of publication of application: 07.07.2021
(73) Proprietor: Caleffi S.p.A., 28010 Fontaneto d'Agogna Novara (IT)
(72) Inventor: CALEFFI, Marco, 28010 Fontaneto d'Agogna (IT)
(74) Representative: Siniscalco, Fabio

(56) References cited:
- WO-A1-2018/207083
- CN-A- 109 381 914
- GB-A- 2 537 152
- GB-A- 2 573 469

## Description

### BACKGROUND OF THE INVENTION

The object of the present invention is an on-off valve which also performs a filtering function and is suitable for being installed in hydraulic systems.

### STATE OF ART

There are magnetic dirt separators on the market to be applied to domestic boilers that solve system problems due to pollution from particles that are formed due to the corrosion effect and incrustations during normal system operation.

This type of dirt separator is equipped with magnetic components that collect all the impurities present in the system in a special area of the dirt separator, preventing its circulation within it, thus avoiding wear and damage to the rest of the components of the plant, in particular circulators and heat exchangers. In addition, this magnetic filtration exerts a continuous protective action on the boiler.

These magnetic dirt separators are normally installed on the system return circuit, at the boiler inlet, to protect the boiler itself from all the impurities present in the system, especially during the start-up phase.

Such filtration devices must necessarily be compact because the space below the boilers for domestic use is limited.

Furthermore, the cleaning of these filtration devices must be simple so as to require a limited time for the operation and not cause particular problems for the maintenance operator, taking into account that these filtration devices must remain installed during cleaning. Relevent prior art documents are WO 2018/207083 Al, GB 2 573 469 A and GB 2 537 152 A.

### PURPOSE OF THE INVENTION

The object of the present invention is to propose an on-off valve to be applied to hydraulic systems, and in particular to boilers for domestic use, which performs a filtering function better than the magnetic dirt separators on the market and at the same time which is compact and simple for cleaning.

### BRIEF DESCRIPTION OF THE INVENTION

This object is achieved by means of an on-off valve with a filtering function according to the first claim.

The preamble of the first claim refers to WO2018/207083A1.

### BRIEF DESCRIPTION OF THE DRAWINGS

To better understand the invention, a description of a non-limiting exemplary embodiment thereof is given below, illustrated in the attached drawings in which:
fig.1 is a perspective view of an on-off valve according to the invention;
fig.2 is a sectional perspective view of the valve of fig.1;
fig.3 is an exploded perspective view of the valve of fig.1;
fig.4 is a perspective view of a component of the valve of fig.1;
fig.5 is a perspective view from another angle of the component of fig.4;
fig.6 is a sectional perspective view of the component of fig.4;
fig.7 is an exploded perspective view of the component of fig.4;
fig.8 is a longitudinal section view of the valve of fig.1 in a first operating position;
fig.9 is a longitudinal section view of the valve of fig.1 in a second operating position.

### DETAILED DESCRIPTION OF THE INVENTION

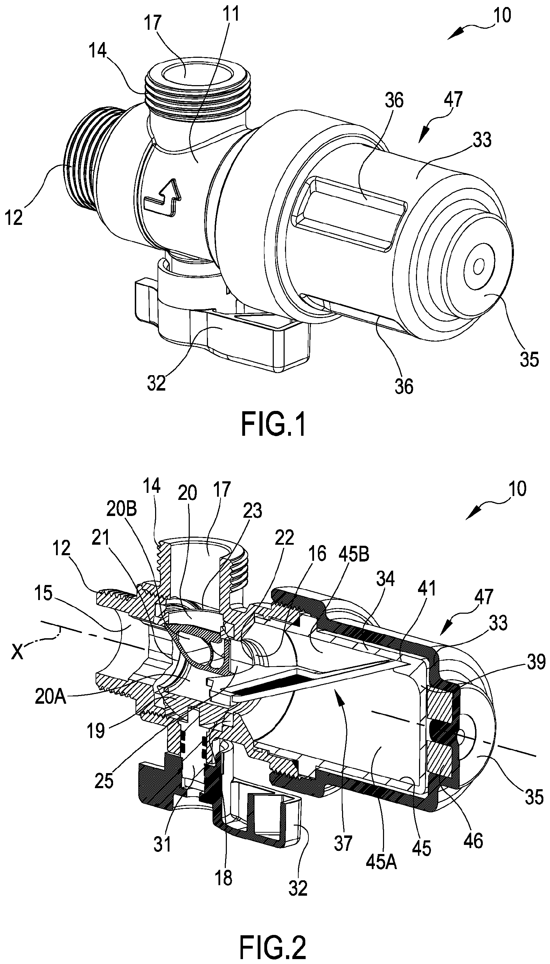

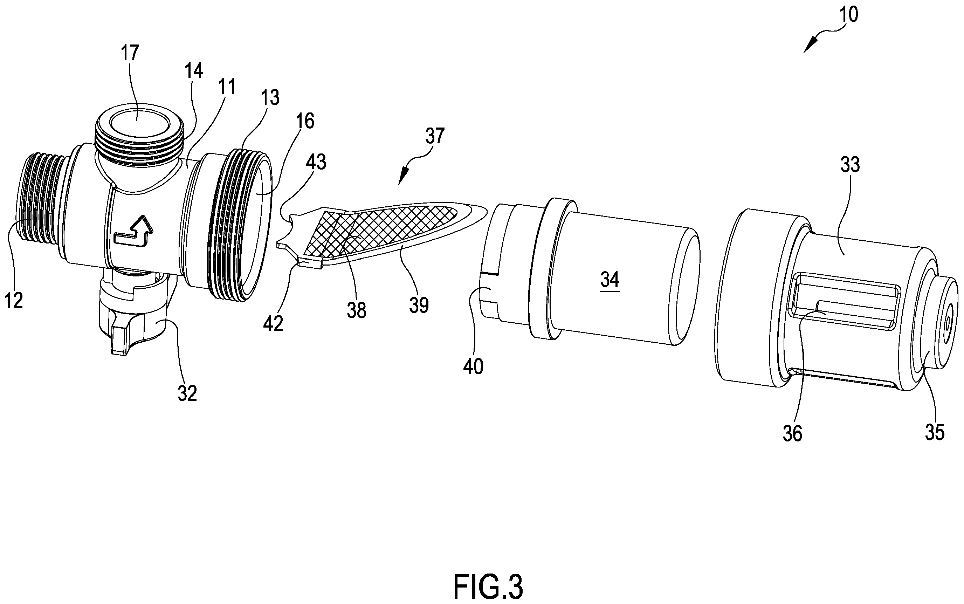

The on-off valve shown in figs.1-3 is a ball valve, generally indicated by 10, intended for hydraulic applications.

The valve 10 has a valve body 11 with three threaded connections 12,13,14 arranged in a T shape, in correspondence of which three respective ducts 15,16,17 are formed inside the valve 10. The ducts 15 and 16 are arranged along the same X axis while the duct 17 is perpendicular to the X axis.

A seat 18 is obtained in the valve body 11 which rotatably houses a ball shutter 19 which regulates the flow of fluid inside the valve body 11 between the ducts 15,16 and 17.

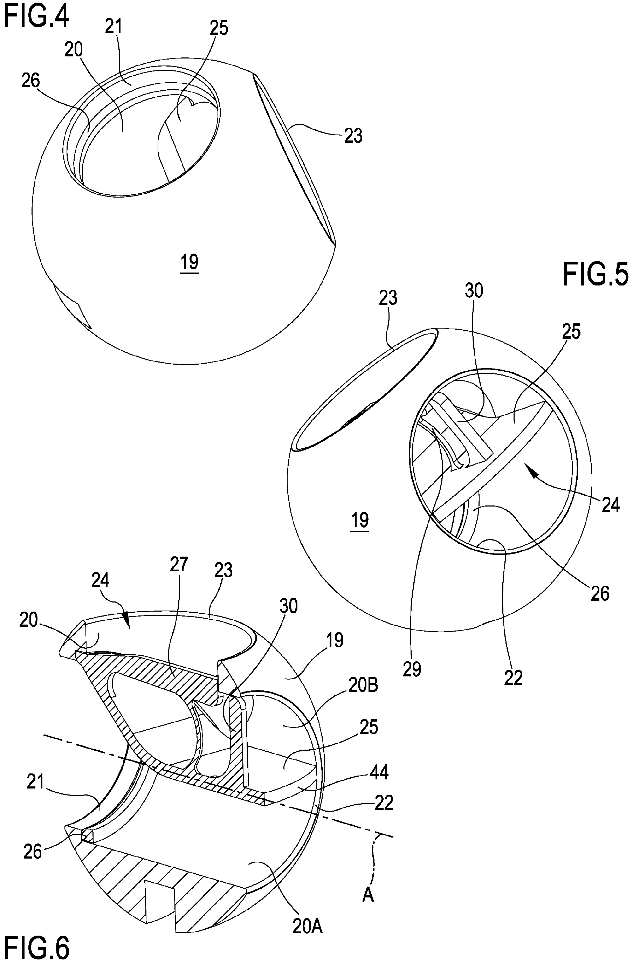

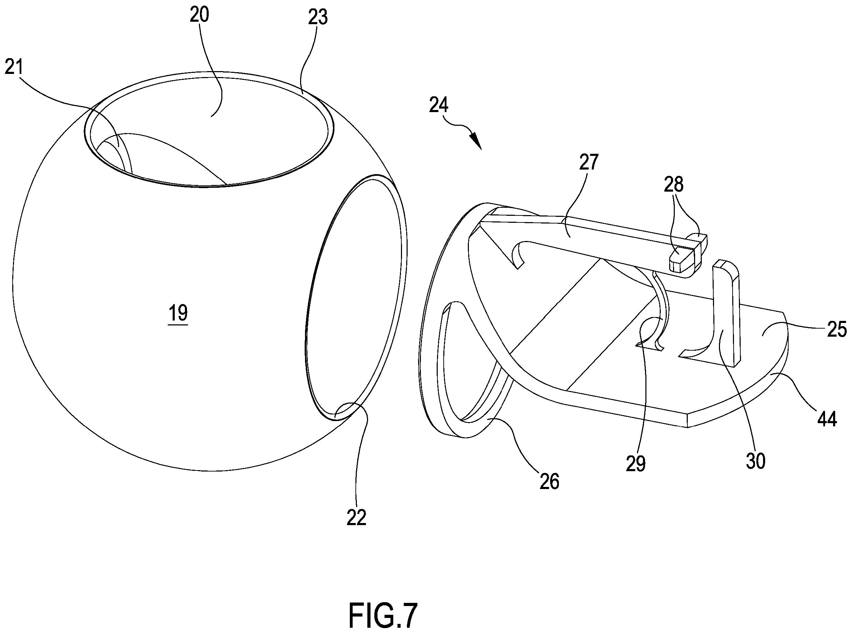

The ball shutter 19 is shown in detail in figs.4-7. This shutter 19 has an internal cavity 20 and has three holes 21,22,23 which connect the outside with the internal cavity 20 of the shutter 19. The holes 21 and 22 are arranged along the same axis A while the hole 23 it is arranged along an axis which is perpendicular to axis A.

An appropriately configured plastic insert 24 is housed in the cavity 20 of the ball shutter 19. First of all, the insert 24 is formed by a ducting wall 25 which extends throughout the cavity 20 by tilting upwards (in the operating position) in the direction of the hole 23, so as to divide the cavity 20 into two asymmetrical chambers 20A and 20B separated from each other. At the tilted end of the ducting wall 25 there is a ring 26 with an axis coinciding with the axis A. From this tilted end of the ducting wall 25 extends a wing 27, parallel to the axis A, which ends with two small wings 28 which extend opposite and perpendicular to the wing 27; the wing 27 is supported in the projecting part by a leg 29 with an arc of a circle. On the opposite side with respect to the ring 26 on the ducting wall 25, a further wing 30 extends perpendicular to the axis A. The ring 26 abuts against the edge of the hole 21, the wing 27 engages with elastic snap with its small wings 28 to the wall of the cavity 20, and the wing 30 abuts against this wall of the cavity 20; in this way the insert 24 is constrained by the ring 26 and the wings 27,30 in the correct and stable position inside the cavity 20.

As shown in fig.2, the ball shutter 19 is actuated by means of a stem 31 which at one end mates with the shutter 19 while at the other end it comes out of the valve body 11 to be connected to a driving knob 32.

With reference to Figs. 1-3, a closed structure 47 for collecting particles is connected to the body 11, formed by a cylindrical container 33 and by a transparent glass 34 which is removably housed in the container 33. In particular, the container 33 is screwed on the attachment 13 and locks the glass 34 tightly against the attachment 13. The interior of the glass 34 communicates with the duct 16. A toroidal permanent magnet 46 is incorporated in the bottom 35 of the container 33. The container 33 also has a series of openings 36 which form, with portions of the wall of the glass 34, transparent windows that allow you to see the inside of the glass 34 from the outside.

Inside the glass 34 there is a filter 37 composed of a metal filtering net 38 and a plastic frame 39 which acts as a support for the net 38. The filter 37 has an arched profile and it tilts upwards in direction of the corner of the bottom 39 of the glass 34, so as to divide the internal cavity 45 of the glass 34 into two asymmetrical chambers 45A and 45B communicating with each other through the filter 37. The ducting wall 25 and the filter 37 are aligned in such a way to result being geometrically consecutive.

The glass 34 is positioned correctly with respect to the valve body 11 thanks to teeth 40 placed on the mouth of the glass 34 which couple with corresponding slots, not visible in the drawings, obtained in the duct 16.

The filter 37 is correctly positioned in the glass 34 and with respect to the valve body 11 thanks to the interlocking of one of its ends in a recess 41 obtained in the bottom corner of the glass 34 and thanks to teeth 42 at the other end that mate with corresponding slots, not visible in the drawings, obtained in the duct 16.

The filter 37 has at the end inserted in the duct 16 a concave arcuate portion 43 which mates with a corresponding convex arcuate portion 44 (fig.4) of the ducting wall 25 of the insert 24 to achieve continuity between the ducting wall 25 and the filter 37 and to allow rotation of the shutter 19.

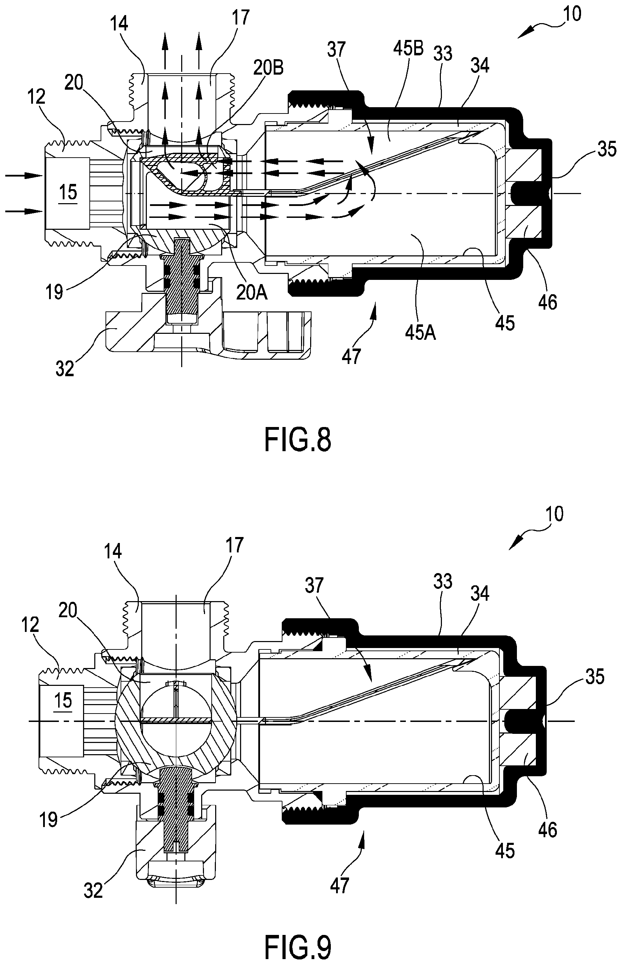

The operation of the on-off valve 10 is as follows, with reference to figs.8,9.

In fig.8 the valve 10 is in the open position meaning that the shutter 19 is rotated, by means of the knob 32, to a position such that (fig.2) the holes 21 and 22 of the shutter 19 are aligned respectively with the duct 15 and the duct 16, while the hole 23 of the shutter 19 is aligned with the duct 17. The axes A and X coincide.

As indicated by the arrows, the fluid of the heating system enters the duct 15, flows into the chamber 20A of the ball shutter 19, enters the chamber 45A of the glass 34, then passes through the filter 37, flows into the chamber 45B of the glass 34, flows in the chamber 20B of the ball shutter 19, and then it comes out of the valve 10 through the duct 17.

In the path indicated above, the heavy inert particles present in the fluid are retained by the filter 37 and fall into the lower area of the cylindrical side wall of the glass 34, while the ferromagnetic particles present in the fluid are attracted by the magnet 46 and collect on the bottom of the glass 34.

In fig.9 the valve 10 is in the closed position, i.e. the shutter 19 is rotated, by means of the knob 32, to a position such that the holes 21 and 22 of the shutter 19 are closed by the internal walls of the valve body 11. The A and X axes are perpendicular to each other. In this position, the circulation of fluid is blocked. The communication between the inside of the closed collecting structure 47 and the inlet 15 and the outlet 17 of the valve 10 is interrupted (obviously there is closure between the inlet 15 and the outlet 17, being the valve 10 in the closed position).

This closed position can be used for cleaning the glass 34 and the filter 37. It is sufficient to unscrew the container 33 from the connection 13, remove the glass 34 and the filter 37 and proceed to clean the glass 34 and the filter 37, then bringing everything back into the assembled position.

The on-off valve 10 thus performs in addition to the function of opening or closing the flow of fluid through the valve itself also the function of removing both the heavy inert particles and the ferromagnetic particles present in the fluid, resulting very effective in filtration.

It is emphasized that this double function is carried out with a simple, reliable, compact structure, and with low production and maintenance costs. In essence it is an on-off valve that incorporates the filtration system.

It should also be noted that the cleaning of the filtration system is very simple, as seen above.

The valve 10 is particularly suitable for being applied to wall-mounted boilers for domestic use by installing it on the return circuit of the system, at the boiler inlet.

If I place the insert 24 inside the rotated ball shutter 19, with respect to the position shown, at an angle of 180° with respect to the axis A and I rotate the closed structure 47 with the filter 37 correspondingly with respect to the X axis, it is possible to invert the flow direction inside the valve 10, i.e. the output 17 becomes the input and the input 15 becomes the output, notwithstanding the on-off and filtering function of the valve 10.

Obviously, variations and/or additions to what has been described and illustrated can be provided.

In the shown examples, the obturator is of the ball-type, but other obturators can also be used, even if the ball valves are widely used in hydraulic systems.

The configuration and the number of ducts of the valve can vary.

The flow channelling wall can be formed directly inside the ball shutter and not on an insert housed in the ball shutter. The configuration of this channel wall can vary.

The illustrated container is cylindrical in shape, but it can also be made in a different shape suitable for the collection of ferrous powders. One or more magnets of any shape can be placed in the container, in the position deemed most appropriate. The magnets can also be incorporated in an external element, for example an annular element, which is removably applied to the container. Even the windows of the container, where provided, can have any shape and location. As an alternative to the windows, the container itself can be transparent to observe the level of filling of the ferrous powders inside. A windowless container can also be provided. Furthermore, the container can be removably shaped in another way to the valve body, for example by snap coupling and not necessarily by screw coupling.

In a simplified version the glass can be omitted. In this case, a bulkhead between magnet and fluid must be provided in the container to facilitate the elimination of magnetic particles.

## Claims

1. Hydraulic on-off valve (10) with filtering function for hydraulic applications comprising a valve body (11) in which a shutter (19) is received, which can be operated between an open and a closed position and in which a cavity (20) is obtained for fluid passage communicating in the open position with an inlet (15) and an outlet (17) of the valve, wherein the cavity (20) has a first (20A) and a second (20B) chamber separated from one another, wherein a removable closed structure (47) is provided, for collecting particles, provided with magnetic attraction elements (46), fixed to the valve body (11), and communicating internally with the inlet (15) and the outlet (17) of the valve in the open position, wherein inside the closed structure (47) a first (45A) and a second (45B) chamber are obtained that communicate through a filter (37), wherein in the open position the fluid coming from the inlet (15) of the valve flows into the first chamber (20A) of the shutter (19), enters the first chamber (45A) inside the closed structure (47), passes through the filter (37), flows into the second chamber (45B) inside the closed structure (47), flows into the second chamber (20B) of the shutter (19), and exits the outlet (17) of the valve, in the closed structure (47) being accumulated the ferromagnetic particles attracted by the magnetic attraction elements (46) and the inert particles filtered by the filter (37), **characterized by** the fact that the first (20A) and the second (20B) chamber are obtained by a ducting wall (25) that runs through the cavity (20) of the shutter (19), that the filter (37) has a tilted configuration, that the ducting wall (25) and the filter (37) are geometrically consecutive, that the first chamber (20A) and the second chamber (20B) of the shutter (19) are asymmetric with respect to one another and the first chamber (45A) and the second chamber (45B) inside the closed structure (47) are also asymmetric with respect to one another divided by the filter (37), in the closed position the communication between the inside of the closed structure (47) and the inlet (15) and the outlet (17) of the valve being interrupted.

2. Valve according to claim 1, wherein the ducting wall (25) is obtained on an insert (24) received in the cavity (20).

3. Valve according to claim 2, wherein the insert (24) is provided with elements (26-30) for fixing and stabilizing the insert (24) inside the cavity (20).

4. Valve according to claim 3, wherein said fixing and stabilizing elements comprise a ring (26) supported on an edge of a fluid passage hole (21) of the shutter (19) and wings (27, 28, 30) coupled with the wall of the cavity (20).

5. Valve according to any preceding claim, wherein the ducting wall (25) has a tilted configuration.

6. Valve according to any preceding claim, wherein the magnetic attraction elements comprise one or more permanent magnets (46) incorporated into the container (33).

7. Valve according to any preceding claim, wherein the closed structure (47) comprises a container (33) and a glass (34) removably received in the container (33), in which the filter (37) is located, in the glass (34) being accumulated the ferromagnetic particles attracted by the magnetic attraction elements (46) and the inert particles filtered by the filter (37).

8. Valve according to claim 7, wherein the container (33) is transparent or has one or more transparent windows to observe the filling level of the particles in the glass (34) from the outside.

9. Valve according to claim 7 or 8, wherein the glass (34) is transparent and the container (33) has one or more openings (36) that form with wall portions of the glass (34) transparent windows that enable the inside of the glass (34) to be seen from the outside.

10. Valve according to any preceding claim, wherein the filter consists of a mesh filter (37).

11. Valve according to any preceding claim, wherein the shutter consists of a ball shutter (19).

## Patentansprüche

1. Hydraulisches Schaltventil (10) mit Filterfunktion für hydraulische Anwendungen, umfassend einen Ventilkörper (11), in dem ein Verschluss (19) aufgenommen ist, die zwischen einer offenen und einer geschlossenen Position betrieben werden kann und in dem ein Hohlraum (20) zum Durchgang von Fluid hergestellt ist, der in der offenen Position mit einem Einlass (15) und einem Auslass (17) des Ventils kommuniziert, wobei der Hohlraum (20) eine erste (20A) und eine zweite (20B) voneinander getrennte Kammer aufweist, wobei eine entfernbare geschlossene Struktur (47) zum Sammeln von Partikeln bereitgestellt ist, bereitgestellt mit magnetischen Anziehungselementen (46), fixiert an dem Ventilkörper (11) und intern mit dem Einlass (15) und dem Auslass (17) des Ventils in der offenen Position kommunizierend, wobei innerhalb der geschlossenen Struktur (47) eine erste (45A) und eine zweite (45B) Kammer hergestellt sind, die durch einen Filter (37) hindurch kommunizieren, wobei in der offenen Position das Fluid, das aus dem Einlass (15) des Ventils kommt, in die erste Kammer (20A) des Verschlusses (19) fließt, in die erste Kammer (45A) im Inneren der geschlossenen Struktur (47) eintritt, durch den Filter (37) hindurchgeht, in die zweite Kammer (45B) im Inneren der geschlossenen Struktur (47) fließt, in die zweite Kammer (20B) im Inneren des Verschlusses (19) fließt und den Auslass (17) des Ventils verlässt, wobei in der geschlossenen Struktur (47) die ferromagnetsichen Partikel, die von den magnetischen Anziehungselementen (46) angezogen werden, und die inerten Partikel, die von dem Filter (37) gefiltert werden, akkumuliert werden, **gekennzeichnet durch** die Tatsache, dass die erste (20A) und die zweite (20B) Kammer durch eine Kanalwand (25) hergestellt sind, die durch den Hohlraum (20) des Verschlusses (19) verläuft, dass der Filter (37) eine geneigte Konfiguration aufweist, dass die Kanalwand (25) und der Filter (37) geometrisch konsekutiv sind, dass die erste Kammer (20A) und die zweite Kammer (20B) des Verschlusses (19) bezüglich einander assymetrisch sind und die erste Kammer (45A) und die zweite Kammer (45B) im Inneren der geschlossenen Struktur (47) bezüglich einander assymetrisch sind, durch den Filter (37) geteilt, in der geschlossenen Position die Kommunikation zwischen dem Inneren der geschlossenen Struktur (47) und dem Einlass (15) und dem Auslass (17) des Ventils unterbochen ist.

2. Ventil nach Anspruch 1, wobei die Kanalwand (25) auf einem in dem Hohlraum (20) aufgenommenen Einsatz (24) hergestellt ist.

3. Ventil nach Anspruch 2, wobei der Einsatz (24) mit Elementen (26-30) zum Fixieren und Stabilisieren des Einsatzes (24) im Inneren des Hohlraums (20) bereitgestellt ist.

4. Ventil nach Anspruch 3, wobei die Fixierungs- und Stabilisierungselemente einen Ring (26), der auf einem Rand eines Fluiddurchgangslochs (21) des Verschlusses (19) getragen wird, und mit der Wand des Hohlraums (20) gekoppelte Flügel (27, 28, 30) umfassen.

5. Ventil nach einem vorstehenden Anspruch, wobei die Kanalwand (25) eine geneigte Konfiguration aufweist.

6. Ventil nach einem vorstehenden Anspruch, wobei die magnetischen Anziehungselemente einen oder mehrere in dem Behälter (33) inkorporierte Permanentmagneten (46) umfassen.

7. Ventil nach einem vorstehenden Anspruch, wobei die geschlossene Struktur (47) einen Behälter (33) und einen entfernbar in dem Behälter (33) aufgenommenen Becher (34) umfasst, in dem der Filter (37) sich befindet, wobei die durch die magnetischen Anziehungselemente (46) angezogenen ferromagnetischen Partikel und die durch den Filter (37) gefilterten inerten Partikel in dem Becher (34) akkumuliert werden.

8. Ventil nach anspruch 7, wobei der Behälter (33) transparent ist oder ein oder mehrere transparente Fenster aufweist, um den Füllstand der Partikel in dem Becher (34) von der Außenseite zu beobachten.

9. Ventil nach Anspruch 7 oder 8, wobei der Becher (34) transparent ist und der Behälter (33) eine oder mehrere Öffnungen (36) aufweist, die mit Wandabschnitten des Bechers (34) transparente Fenster bilden, die dem Inneren des Bechers (34) ermöglichen, von der Außenseite gesehen zu werden.

10. Ventil nach einem vorstehenden Anspruch, wobei der Filter aus einem Maschenfilter (37) besteht.

11. Ventil nach einem vorstehenden Anspruch, wobei der Verschluss aus einem Ballverschluss (19) besteht.

## Revendications

1. Vanne marche/arrêt hydraulique (10) avec fonction de filtrage pour applications hydrauliques comprenant un corps de vanne (11) dans lequel est reçu un obturateur (19), qui peut être actionné entre une position ouverte et une position fermée et dans lequel une cavité (20) est obtenue pour un passage de fluide communiquant dans la position ouverte avec une entrée (15) et une sortie (17) de la vanne, dans laquelle la cavité (20) présente une première (20A) et une seconde (20B) chambres séparées l'une de l'autre, dans laquelle une structure fermée amovible (47) est prévue, pour collecter des particules, pourvue d'éléments d'attraction magnétique (46), fixés au corps de vanne (11), et communiquant intérieurement avec l'entrée (15) et la sortie (17) de la vanne dans la position ouverte, dans laquelle à l'intérieur de la structure fermée (47), une première (45A) et une seconde (45B) chambres sont obtenues, qui communiquent à travers un filtre (37), dans laquelle, dans la position ouverte, le fluide provenant de l'entrée (15 ) de la vanne s'écoule dans la première chambre (20A) de l'obturateur (19), pénètre dans la première chambre (45A) à l'intérieur de la structure fermée (47), passe à travers le filtre (37), s'écoule dans la seconde chambre (45B) à l'intérieur de la structure fermée (47), s'écoule dans la seconde chambre (20B) de l'obturateur (19), et sort par la sortie (17) de la vanne, les particules ferromagnétiques attirées par les éléments d'attraction magnétique (46) et les particules inertes filtrées par le filtre (37) étant accumulées dans la structure fermée (47), **caractérisée par le fait que** la première (20A) et la seconde (20B) chambres sont obtenues par une paroi de conduite (25) qui passe à travers la cavité (20) de l'obturateur (19), que le filtre (37) présente une configuration inclinée, que la paroi de conduite (25) et le filtre (37) sont géométriquement consécutifs, que la première chambre (20A) et la seconde chambre (20B) de l'obturateur (19) sont asymétriques l'une par rapport à l'autre et que la première chambre (45A) et la seconde chambre (45B) à l'intérieur de la structure fermée (47) sont également asymétriques l'une par rapport à l'autre, divisées par le filtre (37), dans la position fermée, la communication entre l'intérieur de la structure fermée (47) et l'entrée (15) et la sortie (17) de la vanne étant interrompue.

2. Vanne selon la revendication 1, dans laquelle la paroi de conduite (25) est obtenue sur un insert (24) reçu dans la cavité (20).

3. Vanne selon la revendication 2, dans laquelle l'insert (24) est pourvu d'éléments (26-30) pour fixer et stabiliser l'insert (24) à l'intérieur de la cavité (20).

4. Vanne selon la revendication 3, dans laquelle lesdits éléments de fixation et de stabilisation comprennent une bague (26) supportée sur un bord d'un trou de passage de fluide (21) de l'obturateur (19) et des ailettes (27, 28, 30) couplées à la paroi de la cavité (20).

5. Vanne selon l'une quelconque des revendications précédentes, dans laquelle la paroi de conduite (25) présente une configuration inclinée.

6. Vanne selon l'une quelconque des revendications précédentes, dans laquelle les éléments d'attraction magnétique comprennent un ou plusieurs aimants permanents (46) incorporés dans le contenant (33).

7. Vanne selon l'une quelconque des revendications précédentes, dans laquelle la structure fermée (47) comprend un contenant (33) et un verre (34) reçu de manière amovible dans le contenant (33), dans lequel le filtre (37) est situé, les particules ferromagnétiques attirées par les éléments d'attraction magnétique (46) et les particules inertes filtrées par le filtre (37) étant accumulées dans le verre (34).

8. Vanne selon la revendication 7, dans laquelle le contenant (33) est transparent ou présente une ou plusieurs fenêtres transparentes pour observer le niveau de remplissage des particules dans le verre (34) depuis l'extérieur.

9. Vanne selon la revendication 7 ou 8, dans laquelle le verre (34) est transparent et le contenant (33) présente une ou plusieurs ouvertures (36) qui forment avec des parties de paroi du verre (34) des fenêtres transparentes qui permettent de voir l'intérieur du verre (34) depuis l'extérieur.

10. Vanne selon l'une quelconque des revendications précédentes, dans laquelle le filtre consiste en un filtre à mailles (37).

11. Vanne selon l'une quelconque des revendications précédentes, dans laquelle l'obturateur consiste en un obturateur à bille (19).
